# EUROPÄISCHE PATENTSCHRIFT

(11) **EP 0 568 962 B1**
(45) Veröffentlichungstag und Bekanntmachung des Hinweises auf die Patenterteilung: **16.10.1996**
(21) Anmeldenummer: 93107176.5
(22) Anmeldetag: 03.05.1993
(51) Int. Cl.: B29C 47/90, B29C 47/00

(54) **Einrichtung zur Herstellung eines Kammerkörpers für die Aufnahme von Lichtwellenleitern und Verfahren zur Herstellung des Kammerkörpers**
Device for the production of a hollow body for the placement of optical fibres and process for the production of the hollow object
Dispositif pour la fabrication d'un produit vide pour la distribution des fibres optiques et procédé pour sa fabrication

(30) Priorität: 08.05.1992 DE 4215185
(43) Veröffentlichungstag der Anmeldung: 10.11.1993
(73) Patentinhaber: SIEMENS AKTIENGESELLSCHAFT, 80333 München (DE)
(72) Erfinder: Schneider, Reiner, W-8624 Ebersdorf bei Coburg (DE)

(56) Entgegenhaltungen:
- EP-A- 0 086 623
- GB-A- 2 015 418
- US-A- 3 296 661
- US-A- 3 538 210
- US-A- 5 053 091

## Beschreibung

Die Erfindung betrifft eine Einrichtung mit einem Extruderkopf zur Herstellung eines mit nach außen offenen Kammern versehenen Kammerkörpers für die Aufnahme von Lichtwellenleitern.

Eine Einrichtung dieser Art ist aus der DE-PS 24 49 439 bekannt, wobei durch die Kammern eine gegen mechanische Beanspruchungen weitgehend geschützte Unterbringung der in sie eingelegten Lichtwellenleitern ermöglicht wird. Mit zunehmenden Faserzahlen im Bereich eines optischen Kabels besteht das Bestreben, die Packungsdichte der Lichtwellenleiter zu erhöhen und dabei trotzdem ihren mechanischen Schutz weiterhin zu gewährleisten. Innerhalb eines vorgegebenen Kammerraumes sollen somit möglichst viele Lichtwellenleiter angeordnet werden. Wenn aber die Kammerwände bzw. die Kammerabmessungen in ihren Dimensionen im Rahmen eines Herstellungsprozesses nicht exakt genug innerhalb enger Toleranzen gefertigt werden, dann kann es in bestimmten Fällen zu unerwünschten mechanischen Beanspruchungen der Lichtwellenleiter kommen.

Aus der EP-A1-0 086 623 ist die Herstellung eines profilierten Kunststoffrohres bekannt, bei dem unmittelbar im Anschluß an den Extruder, eine kombinierte Kühl- und Kalibriereinrichtung vorgesehen ist. Diese besteht aus aneinanderstoßenden Blöcken, die dem Kühlmittelumlauf oder dem Anlegen eines Vakuums dienen. Die Formgebung mittels eines von außen an das Extrudat angelegten Vakuums ist nur dann möglich, wenn es sich um ein schlauchförmiges Extrudat handelt. Kombinierte Kühl- und Kalibriervorrichtungen sind jedoch in ihrem Aufbau äußerst kompliziert und nehmen viel Raum in Anspruch. Wegen der fehlenden Trennung der verschiedenen Aufgaben ist die Einstellung der Betriebsparameter bei derartigen kombinierten Systemen nur sehr schwierig durchführbar. Ähnliche kombinierte Kühl- und Kalibriervorrichtungen für schlauchförmige Extrudate sind auch aus der GB-A-2 015 418 und aus der US-A-3,296,661 bekannt.

In der US-A-3,538,210 ist die Extrusion eines außen profilierten Rohres beschrieben, wobei ebenfalls eine kombinierte Kühl- und Kalibrierkammer vorgesehen ist. In Durchlaufrichtung des schlauchförmigen Extrudats gesehen, sind mehrere profilierte Kalibrierplatten angeordnet, jeweils eine entsprechend geformte zentrale Öffnung aufweisend. Die Kühlkammer enthält eine Flüssigkeit, wobei das Anpressen des extrudierten Schlauchmaterials mittels eines in den Innenraum des Schlauches eingebrachten Überdrucks oder eines von außen angelegten Unterdrucks erfolgt. Auch in diesem Fall ist somit Voraussetzung, daß ein von innen durch Überdruck oder von außen durch Unterdruck formbarer dünner Schlauch als Extrudat vorliegt.

Aus der US 5,053,091 ist die Herstellung eines dünnen Plastikfilms bekannt, bei dem an einer Seite ein geschlitztes Hohlprofil und an der anderen Seite ein in den Schlitz passendes und sich dort verriegelndes dachförmig gestaltetes Gegenstück angebracht wird, die einen zusammen einen Verschluß bilden. Auch hier wird nach der Extrusion eine kombinierte Kühl- und Formeinrichtung in Form eines Kühlschuhes vorgesehen, der an den Verschlußelementen angreift.

Der Erfindung liegt die Aufgabe zugrunde, einen Weg aufzuzeigen, wie in möglichst einfacher und zuverlässiger Weise die Dimensionen der Kammerabmessungen im laufenden Fertigungsbetrieb möglichst weitgehend konstant gehalten werden können. Gemäß der Erfindung wird diese Aufgabe bei einer Einrichtung der eingangs genannten Art dadurch gelöst, daß nach dem Extruderkopf eine mit einem Kühlmittel arbeitende Kühlstufe vorgesehen ist, durch welche der Kammerkörper hindurchgeführt wird, daß nach dieser Kühlstufe eine Kalibriervorrichtung vorgesehen ist, welche in die Kammern eingreift, daß die Kalibriervorrichtung in einem solchen Abstand zum Extruderkopf angeordnet ist, daß an ihrem Eingang das Material des Kammerkörpers zumindest im Bereich der Kammern ausreichend erhärtet aber noch plastisch verformbar ist, und daß die Kalibriervorrichtung mehrere in Durchlaufrichtung hintereinanderliegende Formscheiben aufweist.

Da die Herstellung des Kammerkörpers z.B. infolge Verzug bei der Abkühlung oder infolge von unterschiedlichen Austrittsgeschwindigkeiten aus der Profildüse des Extruderkopfes zu Verformungen neigt, schafft die Erfindung durch die Nachkalibrierung die Möglichkeit, die Kammerabmessungen in einfacher Weise mit hoher Genauigkeit bereitzustellen. Da der Kammerkörper zwar bereits ausreichend erhärtet, aber noch plastisch verformbar ist, bringt diese Art der Kalibrierung eine plastische Nachverformung des Kammerkörpers mit sich, wobei an ihrem Ausgang die einzelnen Kammern mit dem gewünschten Profil und innerhalb sehr enger Toleranzen bereitgestellt werden. Die Erfindung liefert weitgehend unabhängig von der Materialzusammensetzung des Kammerkörpers und von den sonstigen Fertigungsbedingungen ein präzise hergestelltes Produkt als Ausgangsmaterial für das Einlegen der Lichtwellenleiter. Besonders wirkungsvoll ist die Erfindung bei der Extrusion von Material aus einem teilkristallinen Kunststoff (wie Polyethylen), weil hier die Gefahr z.B. des Sich-Verziehens besonders groß ist. Die Erfindung ist auch insbesondere dann von Vorteil, wenn Kammerprofile mit tiefen Einschnitten hergestellt werden.

Die Erfindung betrifft weiterhin ein Verfahren zur Herstellung eines mit Kammern versehenen, extrudierten Kammerkörpers für die Aufnahme von Lichtwellenleitern welches dadurch gekennzeichnet ist, daß nach der Extrusion des Kammerkörpers dieser eine Kühlstufe durchläuft, daß nachfolgend eine Kalibrierung zumindest im Bereich der Kammerwände der Kammern dadurch durchgeführt wird, und daß der Kammerkörper durch mehrere in Durchlaufrichtung hintereinander liegende Formkörper hindurchgeführt wird.

Sonstige Weiterbildungen der Erfindung sind in Unteransprüchen wiedergegeben.

Die Erfindung und ihre Weiterbildungen werden nachfolgend anhand von Zeichnungen näher erläutert.

Es zeigen:
- Fig. 1: in schematischer Darstellung eine Einrichtung gemäß der Erfindung zur Nachkalibrierung eines Kammerkörpers,
- Fig. 2: im Querschnitt den Aufbau eines Kammerkörpers,
- Fig. 3: die Ausgestaltung eines Kalibrierelementes für wechselnde Schlagrichtungen der Kammerprofile,
- Fig. 4: eine weitere Ausgestaltung eines Kalibrierelementes für wechselnde Schlagrichtungen,
- Fig. 5: einen Ausschnitt aus einem Werkzeug für die Durchführung der Kalibrierung im ausgefahrenen Zustand und
- Fig. 6: das Werkzeug nach Fig. 5 mit eingefahrenen Kalibrierwerkzeug.

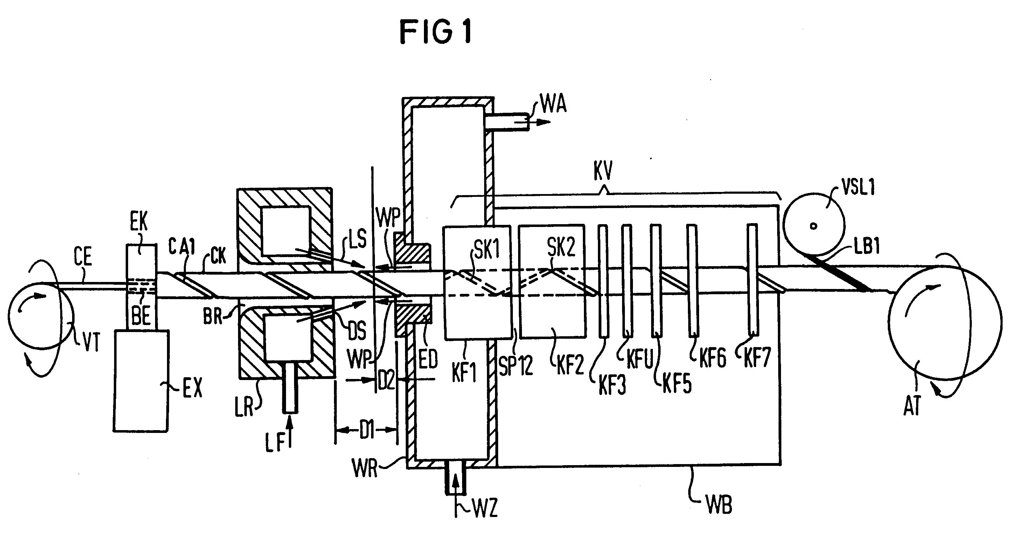

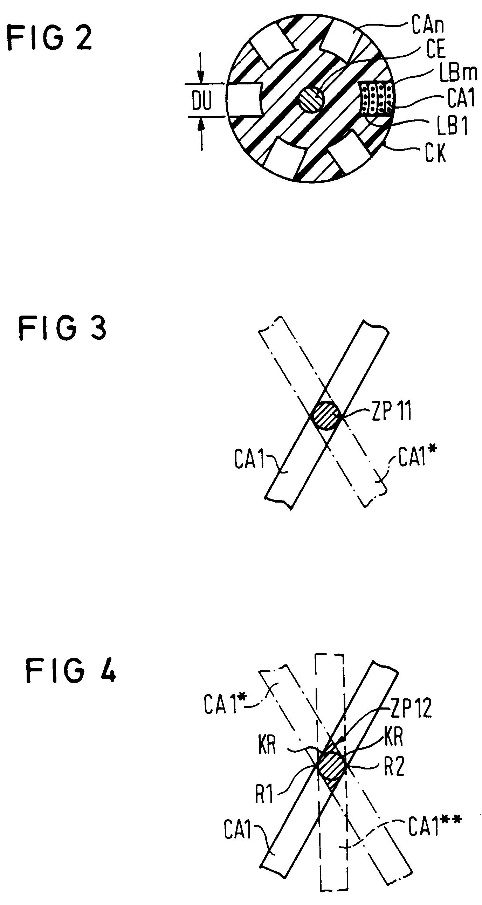

Die Einrichtung nach Figur 1 weist eine rotierende Vorratstrommel VT auf, von der ein zugfestes Element CE z.B. aus Stahl oder Kunststoffmaterial in die Bohrung BE eines Extruderkopfes EK eines Extruders EX eingeführt wird. Mittels des Extruderkopfes EK wird auf das Zentralelement CE ein Profilkörper CK aufgebracht, dessen Ausgestaltung im einzelnen aus der Querschnittdarstellung nach Fig. 2 ersichtlich ist. Der Kammerkörper CK umschließt mit seinem inneren Teil das zugfeste Element CE vollständig und weist nach außen offene, vorzugsweise rechteckförmige Kammern CA1 bis CAn auf. Diese Kammern CA1 bis CAn dienen der Aufnahme von Lichtwellenleitern, wobei im vorliegenden Beispiel für die Kammer CA1 m Lichtwellenleiterbändchen LB1 bis LBm innerhalb der Kammer CA1 dargestellt sind. Jedes dieser Bändchen LB1 bis LBm weist eine Anzahl von z.B. vier oder acht Lichtwellenleitern auf, die hier durch Punkte dargestellt sind. Mittels derartiger Bandleitungen lassen sich besonders hohe Packungsdichten erzielen. Es ist aber auch möglich, anstelle von Bandleitungen andere Konfigurationen von Lichtwellenleitern im Inneren der Kammern CA1 bis CAn unterzubringen. Es ist auch nicht zwingend erforderlich, daß die Kammern wie dargestellt rechteckige Querschnitte aufweisen.

Es ist wesentlich, daß die Abmessungen der Kammern CA1 bis CAn fortlaufend exakt mit geringen Toleranzwerten hergestellt werden, weil nur so z.B. hohe Packungsdichten ohne eine unzulässige Beanspruchung der Lichtwellenleiter realisiert werden können.

Der am Ausgang des Extruderkopfes EK in Figur 1 erhaltene Kammerkörper CK (zur Vereinfachung der Darstellung ist nur ein Kammerelente CA1 gezeichnet) liegt zunächst als weich- bzw. zähflüssige Schmelze vor und die Qualität der Kammerabmessungen hängt unter anderem davon ab, wie hoch die Temperatur im Extruderkopf ist, welches Material bzw. welche Materialzusammensetzung für den Kammerkörper CK verwendet wird, wie schnell und wodurch die nachfolgende Kühlung durchgeführt wird usw. Die auf diese Weise erhaltenen Kammerabmessungen erfüllen die für hohe Packungsdichten erforderlichen Toleranz-Anforderungen an die Dimensionierung der Kammerabmessungen nicht oder zumindest nicht in ausreichendem Maße.

Zwecks Verfestigung des Kammerelementes CK ist als Einlauf- oder Vorkühlung zunächst eine Ring-Blasdüse LR vorgesehen, durch deren Bohrung BR das Kammerelement CK hindurchgeführt wird. Die Ring-Blasdüse LR weist einen ringsum laufenden Schlitz LS auf, der schräg zur Längsachse und damit zur Durchlaufrichtung des Kammerelementes CK verläuft und zwar bevorzugt etwa in einem Winkelbereich zwischen 8^{o} und 30^{o}. Das der Ring-Blasdüse LR zugeführte gasförmige Kühlmittel LF z.B. Druckluft trifft, wie durch den Pfeil LS angedeutet, auf den Kammerkörper CK und bewirkt durch sein Luftpolster eine gewisse Abkühlung, wobei durch den Gasstrom eine Formänderung des in diesem Bereich zunächst noch weitgehend weichen Kammerkörpers CK vermieden wird. Der ringförmige Gasstrom entsprechend dem Pfeil LS hat zusätzlich auch die Aufgabe, das flüssige Kühlmittel, z.B. Wasser, das aus der nachfolgenden Kühlstufe WR austritt (angedeutet durch die etwa koaxial zum Kammerkörper CK verlaufenden Pfeile WP) abzustreifen und zum Abtropfen zu bringen. Das Abblasen dieses flüssigen Kühlmittels ist deswegen zweckmäßig, weil das in Richtung Spritzkopf laufende Kühlmittel das Extrudat stark und ungleichmäßig abkühlen und dabei verformen würde, so daß das Extrudat sich nicht oder nur schwer durch die nachfolgende Kalibrierstufe ziehen ließe.

Es ist vorteilhaft, den Abstand D1 zwischen dem ringförmigen Flüssigkeits-Kühlkörper WR und der Ring-Blasdüse LR einstellbar zu machen, wobei der Bereich für D1 zweckmäßig etwa zwischen 3 und 12 cm zu wählen ist.

Das aus dem Ringspalt der Eintrittsdüse ED austretende flüssige Kühlmittel wird durch die Ring-Blasdüse LR auf die rundum gleichmäßige Distanz D2 gehalten. Dadurch wird erreicht, daß die Oberfläche des Kunststoffmaterials des Kammerkörpers CK beim Eintritt in die erste Formscheibe KF1 der Kalibriervorrichtung KV rundum gleichmäßig verformbar bleibt. Das Ankühlen des Kammerkörpers beseitigt die Klebrigkeit der Kunststoffoberfläche des Kammerkörpers CK als Vorbereitung für die nachfolgende Kalibrierung. Die Kühlstrecke und damit bei gegebener Fertigungsgeschwindigkeit die Kühlzeit soll aber nur so groß sein, daß eine plastische Verformung im Inneren des angekühlten Kunststoffquerschnittes durch die nachfolgende Kalibrierung noch in einfacher Weise möglich ist.

Auch derjenige Teil D2, in dem das Kühlmittel (entsprechend den Pfeilen WP) noch im Bereich des Kammerkörpers CK vorhanden ist, sollte entsprechend einstellbar sein (beispielsweise durch Änderung des Drucks im Bereich der RingBlasdüse LR) und sollte zweckmäßig etwa zwischen 0,5 und 2 cm betragen.

Die Eintrittsdüse ED der Kühlstufe WR weist einen Bohrungs-Durchmesser auf, der entsprechend größer gewählt ist (vorzugsweise 1 - 3 mm) als der Außendurchmesser des Kammerkörpers CK, so daß eine gewisse nicht unerhebliche Menge WP an flüssigem Kühlmittel entgegen der Durchlaufrichtung austritt. Auch ist zu berücksichtigen, daß im Bereich der Kammern des Kammerelementes CK zusätzlich Kühlmittel austritt. Es ist insbesondere vorteilhaft, wenn das Wasser in diesen Kammern ebenfalls vom Luftstrom der Ringblasdüse zurückgehalten bzw. aus den Kammern herausgeblasen wird. Das Austreten des Kühlmittels im Bereich der Eintrittsdüse ED (entsprechend den Pfeilen WP) bewirkt im übrigen auch eine Art schonender "Gleitlagerung" für das Kammerelement CK, das in diesem Bereich zumindest an seiner äußeren Oberfläche bereits angekühlt und verfestigt sein sollte (Schutzhaut). Es ist aber zweckdienlich, wenn das Innere des Kammerkörpers CK im Bereich der nachfolgenden Kalibriereinrichtung noch plastisch verformbar bleibt. Dann läßt sich die Kalibrierung besonders schonend und doch effektiv durchführen. Die Flüssigkeits-Kühleinrichtung WR umgibt den Kammerkörper CK ebenfalls ringförmig, wobei der Zulauf für die Flüssigkeit mit WZ bezeichnet ist, während der Ablauf bei WA liegt. Die Temperatur des Kühlmittels, insbesondere Wasser, liegt zweckmäßig etwa im Bereich zwischen 15 und 25 Grad. Die Abkühlung des Kammerkörpers CK erfolgt in erster Linie im Bereich seiner Oberfläche, so daß außen eine feste Schutzhaut besteht, welche die Kalibrierung ohne Festkleben am Kalibrierwerkzeug ermöglicht. Die weiter innen (d.h. unter der Schutzhaut) liegenden Bereiche des Kammerkörpers sind dagegen noch weich und plastisch verformbar.

Zur Einhaltung exakter Dimensionen bei den Abmessungen der Kammern findet eine Kalibrierung statt, welche mittels der Kalibriervorrichtung KV bewirkt wird. Diese Kalibriervorrichtung KV weist mehrere in Durchlaufrichtung hintereinanderliegende Formscheiben auf, die mit KF1 bis KF7 bezeichnet sind. Die ersten Formscheiben KF1 und KF2 dienen hauptsächlich der plastischen Verformung. Sie weisen in ihrer Durchgangsbohrung vorspringende Stege auf (schematisch angedeutet durch SK1 und SK2), welche genau der gewünschten Kammergröße beim Kammerelement CK entsprechend Figur 2 entsprechen. Zur Vereinfachung der Zeichnung ist jeweils nur einer der Stege dargestellt, und zwar derjenige, der in die Kammer CA1 eintaucht. Die vorspringenden, als Kalibrierungselemente dienenden Stege im Inneren der Formscheiben KF1 und KF2 verlaufen ähnlich einem mehrgängigem Gewinde (d.h. schraubenlinienförmig mit rechteckigem Gewindequerschnitt und n Gewindegängen bei n Kammern mit jeweils der Breite DU einer Kammer - vgl. Fig. 2) und tauchen jeweils in jede der Kammer CA1 bis CAn des Kammerkörpers CK zwecks Formkorrektur ein. Die Dimensionierung ist dabei so gewählt, daß zumindest im Bereich der Formscheiben KF1 und KF2 eine plastische Verformung des Kammerkörpers als Ganzes durchgeführt werden kann. Die in die Kammern des zu kalibrierenden Profiles hineinragenden Zapfen der Formscheiben sind zweckmäßigerweise etwas breiter als die extrudierten Kammern. Damit das Profil nicht in der Kalibrierung stecken bleibt, muß das zwischen den Kammern verformte Segment nach außen, z.B. in einen entsprechenden Spalt hinein, verdrängt werden können. Diese plastische Nachverformung hat den Vorteil, daß das beim Extrusionsvorgang nicht ausreichend exakt hergestellte bzw. erhaltene Kammerprofil durch die Nachbehandlung und die zusätzliche plastische Verformung am Ausgang der Formscheiben KF1 und KF2 wesentlich exakter dimensionierte Kammerprofile CA1 - CAn ergibt, als diese am Ausgang des Extruderkopfes EK bzw. der Kühlstrecke vorliegen.

Das Ausmaß der plastischen Verformung im Bereich der ersten Formscheibe ist abhängig von der Präzision des Extrudates und kann mehrere Zehntel Millimeter betragen, während die zweite Formscheibe KF2 im wesentlichen nur die plastische Verformung der ersten Formscheibe fixiert und dort nur noch eine geringförmige plastische Verformung stattfindet.

Die Erstreckung der Formscheibe KF1 in axialer Richtung beträgt etwa 2 bis 5 cm, während für die zweite Formscheibe KF2 eine Erstreckung etwa im Bereich zwischen 0,2 und 5 cm vorteilhaft ist. Zwischen den beiden Formscheiben KF1 und KF2 liegt ein Spalt SP12, der vorteilhaft im Bereich zwischen 1 und 4 cm gewählt wird. Dieser Spalt hat den Zweck, daß erneut kaltes Kühlmittel, welches auch als Schmiermittel wirkt und in einem Kühlbecken WB enthalten ist, an die Oberfläche des Kammerelementes CK gelangt. Insgesamt ist eine Kalibrier-Länge (Führung des Kammerkörpers CK) von mindestens 20 cm durch die Kalibriervorrichtung KV zweckmäßig.

Die zuverlässige Ausformung der Kammern mit Hilfe der vorgenannten Kalibrierung und die steigungsstabilisierende Wirkung der Kalibrierung erlauben das Einlegen (Einseilen) der Lichtwellenleiter bzw. Lichtwellenleiterbändchen unmittelbar anschließend ("on line") an den Herstellungsprozeß für den Kammerkörper CK, d.h. in einem durchgehenden Arbeitsgang. Dies ist in Fig. 1 durch eine Vorratsspule VSL1 angedeutet, von der ein Lichtwellenleiter oder Lichtwellenleiterbändchen LB1 abgezogen wird. In Wirklichkeit sind natürlich mehrere derartige Vorratsspulen VSL1 (mindestens eine je Kammer - bei Stapelaufbau nach Fig. 2 mit n Lichtwellenleiterbändchen pro Kammer sind n Vorratsspulen pro Kammer erforderlich) vorgesehen.

Da die spiralig verlaufenden Kammern (z.B. CA1) in dieser Linie erzeugt werden, ist die Winkellage der Kammern am Austritt aus der Kalibrierung fixiert. Wenn sich die Schlaglänge, die durch das Verhältnis von Abzugsgeschwindigkeit und Rotationsgeschwindigkeit (Drehzahl) des Kammerelementes gegeben ist, nicht ändert, bleibt der einmal gewählte Einlegepunkt für die Lichtwellenleiter bzw. Lichtwellenleiterbändchen LB1 immer konstant.

Ein Kammerkörper CK verträgt im allgemeinen nur eine bestimmte Anzahl von wirksamen Kalibrierscheiben. Wird diese Anzahl überschritten, dann steigt die Reihung in der Kalibrierung so stark an, daß die Gefahr besteht, daß das Kammerelement in der Kalibrierung steckenbleibt. Allgemein gilt, daß der Abstand der einzelnen Kalibrierscheiben KF1 - KF7 zueinander bei niedrigen Durchlaufgeschwindigkeiten kleiner und bei höheren Durchlaufgeschwindigkeiten entsprechend größer gewählt werden sollte. Hat z.B. der Kammerkörper CK (Material HDPE) einen Außendurchmesser von 10,5 mm und sind 6 Kammern mit einer Breite von 1,5 mm und einer Höhe von 2,7 mm vorgesehen und wird die Anzahl der Scheiben = 20 gewählt, dann gilt folgende Zuordnung:

| Geschwindigkeit | Länge der Kalibrierstrecke (KV) |
|---|---|
| 4 m/min | 200 mm |
| 8 m/min | 400 mm |
| 12 m/min | 600 mm |

Wahrend die Formscheiben KF1 und KF2 eine Erstreckung in axialer Richtung aufweisen, die ein Vielfaches der Kammerbreite DU ausmachen (mindestens das 10- bis 20-fache oder 20 bis 50 mm), sind die nachfolgenden Formscheiben KF3 bis KF7 so dimensioniert, daß ihre axiale Erstreckung etwa im Bereich nur des 1- bis 2-fachen der Öffnungsbreite DU eines Kammerelementes entsprechend Fig. 2 oder 1,5 - 3 mm aufweisen. Sie ragen also mit ihren der Kalibrierung dienenden Ansätzen im wesentlichen nur stiftartig in die entsprechenden Kammeröffnungen hinein. Ihre Hauptfunktion besteht darin, die einzelnen Profilsegmente aus Kunststoffmaterial, die zwischen den einzelnen Kammeröffnungen CA1 bis CAn nach Figur 2 liegen, in der richtigen Position zu halten. Ihr Einfluß auf die Dimensionierung der Kammeröffnungen CA1 bis CAn selbst ist somit im Vergleich zu den Formscheiben KF1 und KF2 wesentlich geringer. Die gesamte Kalibriervorrichtung KV liegt zweckmäßig in der Kühlvorrichtung bzw. dem Kühlbecken WB, die mit einem flüssigen Kühlmittel, bevorzugt Wasser gefüllt ist. Die Abstände der Formscheiben KF3 bis KF7 werden zweckmäßig in Durchlaufrichtung zunehmend größer gewählt. Die Längserstreckung (Wandstärke) der Formscheiben KF3 bis KF7 bleibt dagegen im wesentlichen konstant. Der zunehmend größer werdende Abstand zwischen den einzelnen Kalibrierscheiben KF3 bis KF7 hat den Vorteil, daß mit möglichst wenig Kalibrierscheiben und damit mit wenig Reibung eine große Kalibrierstrecke realisiert wird. Je weiter die Kühlung fortgeschritten ist, desto größer kann der Abstand zwischen den Kalibrierscheiben sein.

Die einzelnen der Kalibrierung dienenden Stege in den Formscheiben KF3 bis KF7 werden zweckmäßig so gewählt, daß diese genau an die Kontur der jeweiligen Kammeröffnungen angepaßt sind.

Der Kammerkörper CK wird nach der Kalibrierung auf eine rotierende Aufwickeltrommel AT aufgewickelt oder in einem durchlaufenden Prozeß mit den Lichtwellenleitern beschickt. Es ist auch möglich, die Trommeln VT und AT feststehend auszubilden und einen rotierenden Extruderkopf EK zu verwenden.

Im einfachsten Fall können für die Formscheiben KF3 bis KF7 kreiszylindrische, in die Durchtrittsöffnung hineinragende Zapfen oder Stifte als Kalibrierungselemente verwendet werden, wie in schematischer Darstellung in Figur 3 gezeigt ist. Dort ist ein (zur Vereinfachung der Darstellung) geradlinig verlaufender Teil der Kammeröffnung CA1 gezeichnet, in die der kreiszylindrische Zapfen CP11 z.B. einer der Formscheiben KF3 bis KF7 hineinragt. Dieser Zapfen CP11 entspricht in seinen Außenabmessungen dem gewünschten Wert DU der Kammerbreite nach Figur 2 und seine Tiefe ist so bemessen, daß er am unteren Ende also jeweils am Boden der Kammeröffnung anliegt oder fast anliegt. Die Verwendung runder Zapfen hat den besonderen Vorteil, daß diese zum einen in einfacher Weise hergestellt werden können und zum anderen auch für unterschiedliche Steigungen bzw. für wechselnde Schlagrichtungen der Kammeröffnungen einsetzbar sind. Dies ist z.B. bei den Formscheiben KF1 und KF2 hinsichtlich der Stege SK1 und SK2 nicht der Fall; sie wären also bei wechselnden Schlagrichtungen der Kammeröffnungen wegzulassen. In vielen Fällen werden nämlich die Kammerelemente CA1 bis CAn nach Fig. 1 nicht fortlaufend gleichsinnig aufgebracht, sondern sie wechseln periodisch ihreUmlaufrichtung, in der Art einer SZ-Verseilung. Da das Profil des Zapfens ZP11 rotationssymmetrisch ist, bleibt auch bei einer anderen Laufrichtung der Kammeröffnung mittels des kreiszylindrischen Zapfens ZP11 eine vollständige Kalibrierung möglich. Dies zeigt die strichpunktierte angedeutete Kammeröffnung CA1^{*}, welche z.B. eine Fortführung der Kammeröffnung CA1 nach einer entsprechenden Richtungsumkehr sein kann (also zeitlich zu einem späteren Zeitpunkt auftritt als der Verlauf der Kammerwandung entsprechend CA1).

Im Inneren der Formscheiben KF3 bis KF ist ebenso (ähnlich bei den Formscheiben KF1 und KF2) für jede Kammer CA1 - CAn ein Zapfen vorgesehen, insgesamt also n über die Innenbohrung verteilte in der Art von Zähnen nach innen ragende Zapfen.

Es ist nicht unbedingt notwendig, einen rotationssymmetrischen Steg oder Zapfen im Inneren der Formscheiben KF3 bis KF7 für jede Kammeröffnung CA1 bis CAn nach Figur 2 vorzusehen. Figur 4 zeigt den Querschnitt eines Zapfens ZP12, der etwa die Form eines Trapezes mit zwei gegenüberliegenden abgerundeten Ecken hat, die mit R1 und R2 bezeichnet sind. Die Krümmung im Bereich dieser Abrundungen R1 und R2 werden am einfachsten festgelegt durch einen gedachten einbeschriebenen Kreis KR, dessen Durchmesser dem des kreiszylindrischen Zapfens ZP11 nach Figur 3 entspricht. Auch hier ist somit gewährleistet, daß für die verschiedenen Laufrichtungen der Kammer CA1, CA1^{*} und CA1^{**} stets der gleiche Profilquerschnitt des Zapfens ZP12 vorliegt, so daß eine exakte Kalibrierung der Kammerwandungen gewährleistet ist und zwar unabhängig von der jeweiligen Schlaglänge und auch für wechselnde Umlaufrichtungen der Kammerelemente.

Beim Anfahren ist es zweckmäßig, wenn dem Kammerkörper CK kein allzu großer Widerstand entgegengesetzt wird. Deshalb ist es vorteilhaft, wenn die einzelnen der Kalibrierung dienenden Stege oder Zapfen (z.B. SK1, SK2, ZP11 oder ZP12 nach den Figuren 1, 3 und 4) bei den Formscheiben KF1 bis KF7 während des Anfahrvorganges zunächst nicht in die entsprechenden Kammern eingreifen.

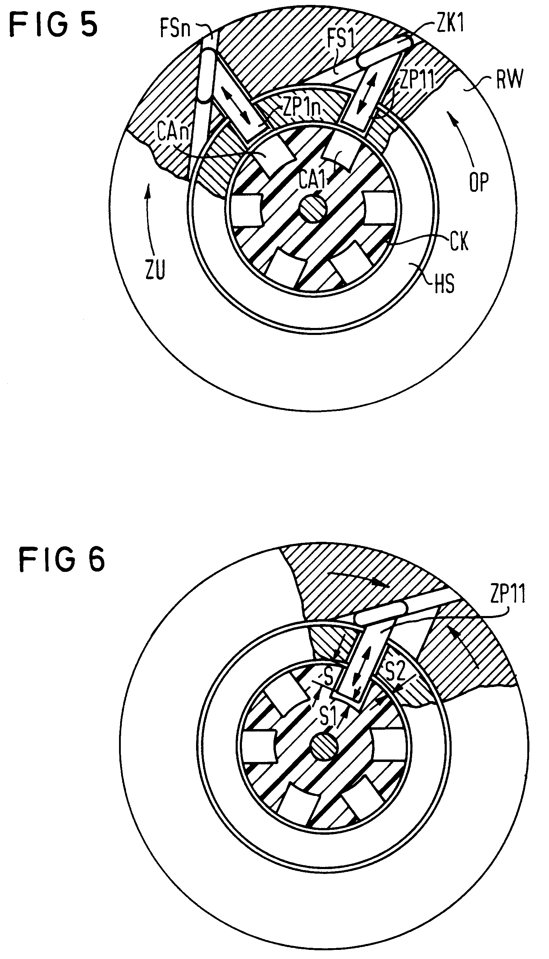

In Figur 5 ist schematisch dargestellt, wie der Kammerkörper CK im Inneren eines ringförmigen Haltewerkzeuges RW verläuft, das Bestandteil der Führungskörper FK1 - FK7 ist. Das Haltewerkzeug RW weist bei n Kammern eine Reihe von n Führungsschlitzen FS1 bis FSn auf, die jeweils den verbreiterten Kopf z.B. ZK1 eines als Kalibrierungselement dienenden Zapfens (z.B. ZP11 für die Kammer CA1) aufnehmen. Diese schräg verlaufenden Führungsschlitze FS1 - FSn bewirken bei einer Drehung des Haltewerkzeuges RW in Richtung des Pfeiles ZU eine Verschiebung der in einer inneren Hülse HS geführten Zapfen (z.B. ZP11) nach innen in Richtung auf die Öffnung der jeweiligen Kammer (z.B. CA1) und damit das Eingreifen in die Kammer und deren nachfolgende Kalibrierung. Diese Drehung des Haltewerkzeugs RW erfolgt nach Abschluß des Anfahrvorgangs. Wird dagegen das Ringwerkzeug RW in Richtung des Pfeiles OP gedreht, dann werden die Zapfen ZP11 - ZP1n aus den Kammern CA1 - CAn entfernt und greifen somit wie dargestellt nicht mehr in diese Öffnungen ein. Dies ist also die Position, in der das Anfahren der Fertigungslinie erleichtert wird. Nach dem Erreichen aller Betriebsparameter werden - wie bereits beschrieben - dann durch ein Drehen des Ringwerkzeuges RW entsprechend dem Pfeil ZU die Zapfen ZP11 - ZP1n in die Kammern CA1 - CAn eingefahren und nehmen die in Figur 6 dargestellte Position ein und bewirken die gewünschte Kalibrierung. Die jeweiligen Kalibrierungselemente z.B. ZP11 sollten nur an den Seitenwänden der jeweiligen Kammern anliegen, so daß am Boden ein kleiner Spalt S1 etwa von 0,01 bis 0,03S frei bleibt, wobei S die Eindringtiefe des Kalibrierungselementes in die jeweilige Kammer bedeutet. Auch außen im Umfangsbereich des Kammerkörpers CK sollte ein kleiner Spalt S2 verbleiben, der zweckmäßig im Bereich zwischen 0,01S und 0,03S gewählt wird. Damit ist Raum geschaffen für die Aufnahme des bei der Kalibrierung verdrängten Materials.

## Patentansprüche

1. Einrichtung mit einem Extruderkopf (EK) zur Herstellung eines mit nach außen offenen Kammern (CA1 bis CAn) versehenen Kammerkörpers(CK) für die Aufnahme von Lichtwellenleitern,
**dadurch gekennzeichnet**,
daß nach dem Extruderkopf (EK) eine mit einem Kühlmittel arbeitende Kühlstufe (WR) vorgesehen ist, durch welche der Kammerkörper (CK) hindurchgeführt wird, daß nach dieser Kühlstufe (WR) eine Kalibriervorrichtung (KV) vorgesehen ist, welche in die Kammern (CA1 bis CAn) eingreift, daß die Kalibriervorrichtung (KV) in einem solchen Abstand zum Extruderkopf (EK) angeordnet ist, daß an ihrem Eingang das Material des Kammerkörpers (CK) zumindest im Bereich der Kammern (CA1 bis CAn) ausreichend erhärtet aber noch plastisch verformbar ist, und daß die Kalibriervorrichtung (KV) mehrere in Durchlaufrichtung hintereinanderliegende Formscheiben (KF1 - KF7) aufweist.

2. Einrichtung nach Anspruch 1,
**dadurch gekennzeichnet**,
daß nach dem Extruderkopf eine Ring-Blasdüse (LR) vorgesehen ist, die einen Kühlmittelstrom (LS) schräg zur Durchlaufrichtung auf den Kammerkörper (CK) richtet.

3. Einrichtung nach einem der vorhergehenden Ansprüche,
**dadurch gekennzeichnet**,
daß die Ring-Blasdüse (LR) vor der Kühlstufe (WR) angeordnet ist.

4. Einrichtung nach Anspruch 3,
**dadurch gekennzeichnet**,
daß der Abstand (D1) zwischen der Ring-Blasdüse (LR) und der Kühlstufe (WR) einstellbar ist.

5. Einrichtung nach einem der vorhergehenden Ansprüche,
**dadurch gekennzeichnet**,
daß das Kühlmittel der Kühlstufe (WR) aus der Bohrung einer Eintrittsdüse (ED) entgegen der Durchlaufrichtung des Kammerkörpers (CK) austritt.

6. Einrichtung nach Anspurch 5,
**dadurch gekennzeichnet**,
daß das austretende Kühlmittel (WP) nur über eine Länge (D2) von 0,5 cm bis 2 cm am Kammerkörper (CK) vorhanden ist und daß diese Länge durch entsprechende Positionierung der Ring- Blasdüse (LR) eingestellt ist.

7. Einrichtung nach einem der vorhergehenden Ansprüche,
**dadurch gekennzeichnet**,
daß in der Kühlstufe (WR) ein flüssiges Kühlmittel vorhanden ist.

8. Einrichtung nach einem der vorhergehenden Ansprüche,
**dadurch gekennzeichnet**,
daß in Durchlaufrichtung gesehen zunächst Formscheiben (KF1, KF2) mit einer in Durchlaufrichtung gesehenen größeren axialen Erstreckung vorgesehen sind, während die nachfolgenden Formscheiben (KF3 bis KF7) eine geringere axiale Erstreckung aufweisen.

9. Einrichtung nach einem der vorhergehenden Ansprüche,
**dadurch gekennzeichnet**,
daß der Abstand zwischen den Formscheiben in Durchlaufrichtung gesehen zunimmt.

10. Einrichtung nach einem der vorhergehenden Ansprüche,
**dadurch gekennzeichnet**,
daß durch die Kalibriervorrichtung eine Führung des Kammerkörpers (CK) über mindestens 20 cm erfolgt.

11. Einrichtung nach einem der vorhergehenden Ansprüche,
**dadurch gekennzeichnet**,
daß im Bereich der Formscheiben (KF1 bis KF7) der Kammerkörper (CK) durch eine Kühlflüssigkeit geführt ist.

12. Einrichtung nach einem der vorhergehenden Ansprüche,
**dadurch gekennzeichnet**,
daß die Kalibriervorrichtung (KV) jeweils für je eine Kammer (CA1 bis CAn) mindestens einen als Kalibrierungselement dienenden stegartigen Vorsprung aufweist, dessen Breite bzw. Durchmesser der Kammerbreite (DU) entspricht und dessen Höhe etwa gleich der Kammertiefe gewählt ist.

13. Einrichtung nach Anspruch 12,
**dadurch gekennzeichnet**,
die stegförmigen Kalibrierungselemente sich in Durchlaufrichtung gesehen, schraubenlinienförmig erstrecken.

14. Einrichtung nach Anspruch 12,
**dadurch gekennzeichnet**,
daß die in die jeweiligen Kammeröffnungen eingreifenden stegförmigen Kalibrierungsrelemente (ZP11) einen Querschnitt aufweisen, der einen Wechsel der Umschlingsrichtung der Kammeröffnungen zuläßt.

15. Einrichtung nach Anspruch 14,
**dadurch gekennzeichnet**,
daß Querschnitt der stegförmigen Kalirierungselemente (ZP11) kreisförmig gewählt ist (Fig. 3).

16. Einrichtung nach Anspruch 14,
**dadurch gekennzeichnet**,
daß der Querschnitt der der Kalibrierungselemente (ZP12) ähnlich einem Trapez mit zwei gegenüberliegenden abgerundeten Ecken gewählt ist (Fig. 4).

17. Einrichtung nach einem der Ansprüche 12 bis 16,
**dadurch gekennzeichnet**,
daß die in die Kammeröffnungen ragenden Kalibrierungselemente für den Anfahrvorgang in radialer Richtung nach außen ausrückbar ausgebildet sind (Fig. 5).

18. Einrichtung nach einem der Ansprüche 12 bis 17,
**dadurch gekennzeichnet**,
daß die Kalibrierungselemente nur jeweils im Bereich der seitlichen Kammerwandungen am Kammerkörper (CK) anliegen.

19. Verfahren zum Betrieb einer Einrichtung nach einem der vorhergehenden Ansprüche zur Herstellung eins mit nach außen offenen Kammer (CA1 bis CAn) versehenen Kammerkörpers (CK) für die Aufnahme von Lichtwellenleitern,
**dadurch gekennzeichnet**,
daß nach der Extrusion des Kammerkörpers (CK) dieser eine Kühlstufe (WR) durchläuft, daß nachfolgend eine Kalibrierung zumindest im Bereich der Kammerwände der Kammern (CA1 bis CAn) dadurch durchgeführt wird, und daß der Kammerkörper (CK) durch mehrere in Durchlaufrichtung hintereinander liegende Formkörper (KF1 - KF5) hindurchgeführt wird.

20. Verfahren nach Anspruch 19,
**dadurch gekennzeichnet**,
daß vor der Kalibrierung eine Kühlung des Kammerkörpers (CK) derart durchgeführt wird, daß dessen Oberfläche in der Art einer Schutzhaut verfestigt wird.

21. Verfahren nach einem der Ansprüche 19 oder 20,
**dadurch gekennzeichnet**,
daß unmittelbar nach der Kalibrierung Lichtwellenleiter bzw. Lichtwellenleiterbändchen (LB1) in die kalibrierten Kammern (CA1) eingelegt werden.

## Claims

1. Device having an extruder head (EK) for producing a chambered body (CK) for receiving optical fibres which is provided with outwardly open chambers (CA1 to CAn), characterized in that there is provided downstream of the extruder head (EK) a cooling stage (WR) which operates using a coolant and through which the chambered body (CK) is guided, in that there is provided downstream of this cooling stage (WR) a calibration device (KV) which engages in the chambers (CA1 to CAn), in that the calibration device (KV) is arranged at a distance from the extruder head (EK) such that at its input the material of the chambered body (CK) has hardened sufficiently, at least in the region of the chambers (CA1 to CAn), but is still plastically deformable, and in that the calibration device (KV) has a plurality of forming discs (KF1 - KF7) situated one behind another in the throughput direction.

2. Device according to Claim 1, characterized in that there is provided downstream of the extruder head an annular blast nozzle (LR) which directs a coolant stream (LS) onto the chambered body (CK) obliquely relative to the throughput direction.

3. Device according to one of the preceding claims, characterized in that the annular blast nozzle (LR) is arranged upstream of the cooling stage (WR).

4. Device according to Claim 3, characterized in that the distance (D1) between the annular blast nozzle (LR) and the cooling stage (WR) is adjustable.

5. Device according to one of the preceding claims, characterized in that the coolant of the cooling stage (WR) emerges from the bore of an entry nozzle (ED) against the throughput direction of the chambered body (CK).

6. Device according to Claim 5, characterized in that the emerging coolant (WP) is present on the chambered body (CK) only over a length (D2) of 0.5 cm to 2 cm, and in that this length is adjusted by appropriate positioning of the annular blast nozzle (LR).

7. Device according to one of the preceding claims, characterized in that a liquid coolant is present in the cooling stage (WR).

8. Device according to one of the preceding claims, characterized in that seen in the throughput direction it is firstly forming discs (KF1, KF2) which have a relatively large axial extent seen in the throughput direction which are provided, whereas the downstream forming discs (KF3 to KF7) have a relatively small axial extent.

9. Device according to one of the preceding claims, characterized in that seen in the throughput direction the distance between the forming discs increases.

10. Device according to one of the preceding claims, characterized in that the calibration device guides the chambered body (CK) over at least 20 cm.

11. Device according to one of the preceding claims, characterized in that the chambered body (CK) is guided through a cooling liquid in the region of the forming discs (KF1 to KF7).

12. Device according to one of the preceding claims, characterized in that for each chamber (CA1 to CAn), the calibration device (KV) respectively has at least one web-like projection which serves as a calibrating element and whose width or diameter corresponds to the chamber width (DU), and whose height is selected to be approximately equal to the chamber depth.

13. Device according to Claim 12, characterized in that seen in the throughput direction the web-shaped calibrating elements extend in a helical shape.

14. Device according to Claim 12, characterized in that the web-shaped calibrating elements (ZP11) engaging in the respective chamber openings have a cross-section which permits a change in the wrap direction of the chamber openings.

15. Device according to Claim 14, characterized in that the cross-section of the web-shaped calibrating elements (ZP11) is selected to be circular (Figure 3).

16. Device according to Claim 14, characterized in that the cross-section of the calibrating elements (ZP12) is selected to resemble a trapezium having two opposite rounded-off corners (Figure 4).

17. Device according to one of Claims 12 to 16, characterized in that for the approach procedure the calibrating elements projecting into the chamber openings are designed to be retractable outwards in the radial direction.

18. Device according to one of Claims 12 to 17, characterized in that the calibrating elements bear against the chambered body (CK) only respectively in the region of the lateral chamber walls.

19. Method for operating a device according to one of the preceding claims for producing a chambered body (CK) for receiving optical fibres which is provided with outwardly open chambers (CA1 to CAn), characterized in that downstream of the extrusion of the chambered body (CK) the latter traverses a cooling stage (WR), in that thereafter calibration is thereby carried out at least in the region of the chamber walls of the chambers (CA1 to CAn), and in that the chambered body (CK) is guided through a plurality of forming members (KF1 - KF5) situated one behind another in the throughput direction.

20. Method according to Claim 19, characterized in that upstream of the calibration, cooling of the chambered body (CK) is carried out in such a way that the surface of the latter is reinforced in the manner of a protective skin.

21. Method according to one of Claims 19 or 20, characterized in that optical fibres or optical fibre ribbons (LB1) are inserted into the calibrated chambers (CA1) immediately downstream of the calibration.

## Revendications

1. Dispositif comportant une tête d'extrusion (EK) pour la fabrication d'un corps (CK) pourvu de chambres (CA1 à CAn) ouvertes vers l'extérieur, qui sont destinées à la réception de guides d'ondes lumineuses,
caractérisé par le fait que,
en aval de la tête d'extrusion (EK), est prévu un étage de refroidissement (WR) qui fonctionne avec un fluide de refroidissement et dans lequel passe le corps à chambres (CK), qu'en aval de cet étage de refroidissement (WR) il est prévu un dispositif de calibrage (KV), qui pénètre dans les chambres (CA1 à CAn), que le dispositif de calibrage (KV) est disposé par rapport à la tête d'extrusion (EK) à une distance de la tête d'extrusion telle qu'à son entrée le matériau du corps à chambres (CK) soit, au moins dans la zone des chambres (CA1 à CAn), suffisamment durci mais encore plastiquement déformable et que le dispositif de calibrage (KV) comporte plusieurs disques de conformation (KF1 à KF7) qui sont disposés les uns derrière les autres dans le sens du passage.

2. Dispositif selon la revendication 1,
caractérisé par le fait que,
en aval de la tête d'extrusion, il est prévu une buse de soufflage annulaire (LR) qui dirige un courant (LS) de fluide de refroidissement sur le corps à chambres (CK) obliquement par rapport au sens du passage.

3. Dispositif selon l'une des revendications précédentes,
caractérisé par le fait que,
la buse de soufflage annulaire (LR) est disposée en amont de l'étage de refroidissement (WR).

4. Dispositif selon la revendication 3,
caractérisé par le fait que,
la distance (D1) entre la buse de soufflage annulaire (LR) et l'étage de refroidissement (WR) est réglable.

5. Dispositif selon l'une des revendications précédentes,
caractérisé par le fait que,
le fluide de refroidissement de l'étage de refroidissement (WR) sort de l'alésage d'une buse d'admission (ED) dans le sens opposé au sens du passage du corps à chambres (CK).

6. Dispositif selon la revendication 5,
caractérisé par le fait que,
le fluide de refroidissement (WP) sortant n'est présent que sur une longueur (D2) de 0,5 cm à 2 cm au niveau du corps à chambres (CK), et que cette longueur est réglée par un positionnement correspondant de la buse de soufflage annulaire (LR).

7. Dispositif selon l'une des revendications précédentes,
caractérisé par le fait que,
un fluide de refroidissement liquide est présent dans l'étage de refroidissement (WR).

8. Dispositif selon l'une des revendications précédentes,
caractérisé par le fait que,
vu dans le sens du passage, il est prévu dans un premier temps des disques de conformation (KF1, KF2) qui, vus dans le sens du passage, ont une grande étendue, alors que les disques de conformation suivants (KF3 à KF7) ont une étendue axiale plus petite.

9. Dispositif selon l'une des revendications précédentes,
caractérisé par le fait que,
vu dans le sens du passage, la distance entre les disques de conformation augmente.

10. Dispositif selon l'une des revendications précédentes,
caractérisé par le fait que,
le dispositif de calibrage assure un guidage du corps à chambres (CK) sur au moins 20 cm.

11. Dispositif selon l'une des revendications précédentes,
caractérisé par le fait que,
dans la région des disques de conformation (KF1 à KF7), le corps à chambres (CK) est guidé par un liquide de refroidissement.

12. Dispositif selon l'une des revendications précédentes,
caractérisé par le fait que,
pour chaque chambre (CA1 à CAn), le dispositif de calibrage (KV) comporte au moins une partie en saillie de type barrette qui sert d'élément de calibrage, dont la largeur ou le diamètre correspond à la largeur (DU) de chambre, et dont la hauteur est choisie pour être approximativement égale à la profondeur de chambre.

13. Dispositif selon la revendication 12,
caractérisé par le fait que,
vus dans le sens du passage, les éléments de calibrage en forme de barrettes s'étendent de façon hélicoïdale.

14. Dispositif selon la revendication 12,
caractérisé par le fait que,
les éléments de calibrage (ZP11) en forme de barrettes, qui pénètrent dans les orifices respectifs des chambres, ont une section transversale qui permet d'alterner le sens d'enroulement des orifices de chambres.

15. Dispositif selon la revendication 14,
caractérisé par le fait que,
la section transversale des éléments de calibrage (ZP11) en forme de barrettes est circulaire (figure 3).

16. Dispositif selon la revendication 14,
caractérisé par le fait que,
la section transversale des éléments de calibrage (ZP12) en forme de barrettes est analogue à un trapèze ayant deux sommets opposés arrondis (figure 4).

17. Dispositif selon l'une des revendications 12 à 16,
caractérisé par le fait que,
pour le processus de démarrage, les éléments de calibrage pénétrant dans les orifices de chambres sont réalisés afin de pouvoir être repoussés vers l'extérieur dans la direction radiale (figure 5).

18. Dispositif selon l'une des revendications 12 à 17,
caractérisé par le fait que,
les éléments de calibrage ne prennent respectivement appui sur le corps à chambre (CK) que dans la région des parois latérales des chambres.

19. Procédé par faire fonctionner un dispositif selon l'une des revendications précédentes destiné à la fabrication d'un corps à chambres (CK) comportant des chambres (CA1 à CAn) ouvertes vers l'extérieur pour la réception de guides d'ondes lumineuses,
caractérisé par le fait que,
après l'extrusion du corps à chambre (CK), celui-ci passe dans un étage de refroidissement (WR), qu'un calibrage est ensuite effectué, au moins dans la zone des parois des chambres (CA1 à CAn), en faisant passer le corps à chambres (CK) dans plusieurs corps de conformation (KF1 à KF5) disposés les uns derrière les autres dans le sens du passage.

20. Procédé selon la revendication 19,
caractérisé par le fait que,
le corps à chambres (CK) est refroidi avant le calibrage de telle sorte que sa surface soit solidifiée sous la forme d'une peau de protection.

21. Procédé selon la revendication 19 ou 20,
caractérisé par le fait que,
directement après le calibrage, des guides d'ondes lumineuses ou des rubans (LB1) à guides d'ondes lumineuses sont insérés dans les chambres (CA1) calibrées.
